# EUROPÄISCHE PATENTANMELDUNG

(11) **EP 2 057 923 A1**
(43) Veröffentlichungstag der Anmeldung: **13.05.2009**
(21) Anmeldenummer: 08167397.2
(22) Anmeldetag: 23.10.2008
(51) Int. Cl.: A47J 31/08

(54) **Filterpapiereinsatz**

(30) Priorität: 12.11.2007 DE 202007015863 U
(71) Anmelder: MELITTA HAUSHALTSPRODUKTE GmbH & Co. Kommanditgesellschaft, D-32427 Minden (DE)
(72) Erfinder: Müller, Georg, 32425 Minden (DE)
(74) Vertreter: Dantz, Jan Henning

(57) **Zusammenfassung**

Filterpapiereinsatz (1), insbesondere für Kaffee, der einen befüllbare Innenraum aufweist, der von Seitenwänden (2) umgeben ist, wobei mindestens eine Seitenwand (2) des Filterpapiereinsatzes (1) mit einem Aromastoff bedruckt ist.

## Beschreibung

Die vorliegende Erfindung betrifft einen Filterpapiereinsatz, insbesondere für Kaffee, der einen befüllbare Innenraum aufweist, der von Seitenwänden umgeben ist.

Es gibt Filterpapiereinsätze, die mit geprägten Markierungen versehen sind, um eine Füllmenge an Kaffeemehl anzuzeigen, für die eine bestimmte Menge an Wasser eine Kaffeemaschine durchlaufen muss. Solche Prägungen sind lebensmittelrechtlich unbedenklich, aber für den Verbraucher auch schlecht sichtbar.

Es ist daher Aufgabe der vorliegenden Erfindung einen Filterpapiereinsatz zu schaffen, der lebensmittelrechtlich unbedenklich verwendet werden kann, wobei eine geschmackliche Differenzierung möglich ist.

Diese Aufgabe wird mit einem Filterpapiereinsatz mit den Merkmalen des Anspruches 1 gelöst.

Gemäß der Erfindung ist mindestens eine Seitenwand des Filterpapiereinsatzes mit einem Aromastoff bedruckt. Durch den Einsatz eines Aromastoffes kann eine lebensmittelrechtlich unbedenkliche Bedruckung erfolgen, wobei durch das Aroma eine geschmackliche Differenzierung ermöglicht wird. Diese kann letztlich die persönliche Note des Filterpapiereinsatzes ausmachen.

Vorzugsweise besitzt der Aromastoff einen farblichen wahrnehmbaren Kontrast zum Filterpapier. Dann ist die Bedruckung für den Verbraucher gut sichtbar und kann die Handhabung des Filterpapiereinsatzes erleichtern.

Gemäß einer bevorzugten Ausgestaltung der Erfindung enthält der Aromastoff nur natürliche Aromastoffe, so dass die Akzeptanz beim Verbraucher erhöht wird. Vorzugsweise enthält der Aromastoff beispielsweise Schokolade, Kakao oder andere Geschmacksrichtungen, wie Mandel, Karamell oder andere Aromastoffe.

Um die Bedruckung vielseitig einsetzen zu können, ist diese vorzugsweise sowohl auf der Druckseite als auch auf der gegenüberliegenden Seite sichtbar. Vorzugsweise ist die Bedruckung an der Außenseite der Seitenwand aufgebracht, so dass dort die Bedruckung mit hoher Qualität sichtbar ist, während an der Innenseite die Bedruckung durchschimmert und dadurch zumindest funktionell verwendet werden kann.

Die Bedruckung umfasst vorzugsweise an einer Seitenwand angeordnete Dosierstriche, um die Menge an Kaffeemehl anzuzeigen, die für eine bestimmte Brühmenge an Tassen eingefüllt werden soll. Die Bedruckung kann sich dabei über die ganze Seite erstrecken und auch andere Markierungen, Logos, Produkthinweise etc. umfassen.

Die Erfindung wird nachfolgend anhand eines Ausführungsbeispieles mit Bezug auf die beigefügte Zeichnung näher erläutert. Es zeigt:

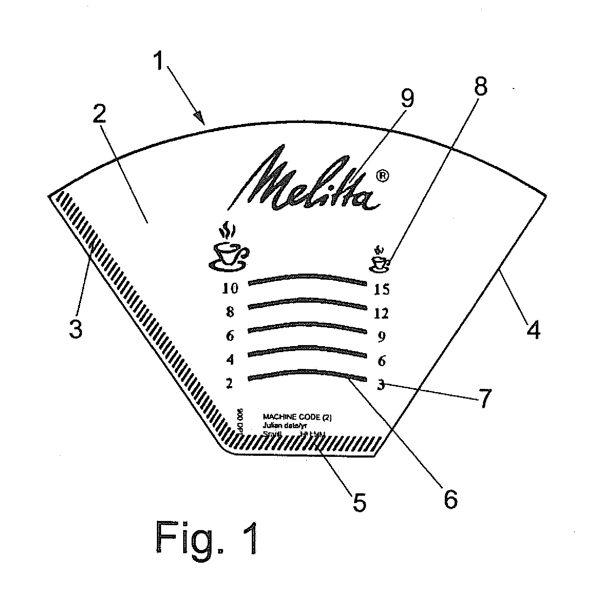

- Figur 1: eine Ansicht eines erfindungsgemäßen Filterpapiereinsatzes.

Ein Filterpapiereinsatz 1, insbesondere für Kaffeemehl umfasst zwei gegenüberliegende Seitenwände, die an einer Seite durch eine Prägenaht 3 und an der gegenüberliegenden Seite durch eine Faltkante 4 miteinander verbunden sind. Bodenseitig ist der Filterpapiereinsatz 1 durch eine Prägenaht 5 verschlossen.

Um die Handhabung des Filterpapiereinsatzes 1 zu verbessern, ist an mindestens einer Seitenwand 2 eine Bedruckung 6, 7, 8 und 9 an der Außenseite angebracht, die aus einem Aromastoff gebildet ist. Die Bedruckung kann dabei durch diverse Druckverfahren, wie Tintenstrahldrucker, Flexodruck, Tampondruck oder Offsetdruck erfolgen.

Als Aromastoff können natürliche Aromastoffe, wie Schokolade bzw. Kakao, Saftkonzentrate oder andere Aromastoffe verwendet werden. Dadurch wird auch ein wahrnehmbarer Farbkontrast zum in nicht bedruckten Bereichen weißen oder braunen Filterpapiereinsatz geschaffen. Bei Verwendung des Filterpapiereinsatzes 1 kann sich zumindest ein Teil der aromahaltigen Bedruckung auflösen, so dass dem Brühgetränk die persönliche Note gegeben wird.

Die Bedruckung umfasst in dem gezeigten Ausführungsbeispiel Dosierstriche 6 sowie Zahlen 7, mittels denen die Füllmenge an Kaffeemehl im Verhältnis zur brühenden Wassermenge angezeigt wird. Ferner sind Symbole 8 für die Größe der Tasse sowie ein Herstellerlogo 9 aufgedruckt. Es können auch noch andere Funktionselemente und Markierungen an der Seitenwand 2 aufgedruckt werden, beispielsweise Herstellerangaben, Produkthinweise und andere Elemente.

## Patentansprüche

1. Filterpapiereinsatz (1), insbesondere für Kaffee, der einen befüllbaren Innenraum aufweist, der von Seitenwänden (2) umgeben ist, **dadurch gekennzeichnet, dass** mindestens eine Seitenwand (2) des Filterpapiereinsatzes (1) mit einem Aromastoff bedruckt ist.

2. Filterpapiereinsatz nach Anspruch 1, **dadurch gekennzeichnet, dass** der Aromastoff einen farblichen Kontrast zum Filterpapier besitzt.

3. Filterpapiereinsatz nach Anspruch 1 oder 2, **dadurch gekennzeichnet, dass** der Aromastoff nur natürliche Aromastoffe enthält.

4. Filterpapiereinsatz nach einem der Ansprüche 1 bis 3, **dadurch gekennzeichnet,dass** der Aromastoff Schokolade oder Kakao enthält.

5. Filterpapiereinsatz nach einem der Ansprüche 1 bis 4, **dadurch gekenzeichnet, dass** die Bedruckung sowohl auf der Druckseite als auch auf der gegenüberliegenden Seite sichtbar ist.

6. Filterpapiereinsatz nach einem der Ansprüche 1 bis 5, **dadurch gekennzeichnet, dass** die Bedruckung an der Seitenwand angeordnete Dosierstriche (6) umfasst.

7. Filterpapiereinsatz nach einem der Ansprüche 1 bis 6, **dadurch gekennzeichnet, dass** die Bedruckung sich im Wesentlichen über mindestens eine Seitenwand (2) erstreckt.
